# FASCICULE DE BREVET EUROPEEN

(11) **EP 4 643 452 B1**
(45) Date de publication et mention de la délivrance du brevet: **02.12.2026**
(21) Numéro de dépôt: 23836904.5
(22) Date de dépôt: 12.12.2023
(51) Int. Cl.: H02P 8/18, H02P 6/08, H02P 6/10, E06B 9/68, G05B 19/416

(54) **DISPOSITIF ET PROCÉDÉ DE CONTRÔLE D'UN MOTEUR ÉLECTRIQUE PRENANT EN COMPTE UN ENVIRONNEMENT MÉCANIQUE DU MOTEUR**
VORRICHTUNG UND VERFAHREN ZUR STEUERUNG EINES ELEKTROMOTORS UNTER BERÜCKSICHTIGUNG EINER MECHANISCHEN UMGEBUNG DES MOTORS
DEVICE AND METHOD FOR CONTROLLING AN ELECTRIC MOTOR TAKING INTO ACCOUNT THE MECHANICAL ENVIRONMENT OF THE MOTOR

(30) Priorité: 28.12.2022 FR 2214609
(43) Date de publication de la demande: 05.11.2025
(73) Titulaire: Somfy Activites SA, 74300 Cluses (FR)
(72) Inventeur: BRUNO, Serge, 74300 Cluses (FR)
(74) Mandataire: Germain Maureau
(86) Numéro de dépôt international: PCT/FR2023/051984
(87) Numéro de publication internationale: WO 2024/141726

(56) Documents cités:
- EP-A1- 0 022 457
- CN-A- 106 788 014
- US-A1- 2020 195 180
- BAILEY S J: "Step Motion Open-Loop Path to Productive Precision", CONTROL ENGINEERING,, vol. 30, no. 7, 1 July 1983 (1983-07-01), pages 73 - 77, XP001395791

## Description

L'invention concerne le domaine des moteurs électriques et plus particulièrement un dispositif de contrôle d'un moteur électrique synchrone, un actionneur électromécanique destiné à un entraînement d'un dispositif d'occultation dans une installation domotique et un procédé de contrôle.

L'invention s'applique dans le domaine des installations domotiques comprenant un dispositif d'occultation d'une ouverture d'un bâtiment telle qu'une porte ou une fenêtre. Ledit dispositif d'occultation, par exemple un volet roulant, un écran intérieur ou un store vénitien, est manœuvrable par le biais d'un actionneur électromécanique. La manœuvre, réalisée par un moteur électrique de l'actionneur électromécanique, consiste en un déploiement ou un repli du dispositif d'occultation et/ou en une modification de l'orientation, c'est-à-dire de l'angle d'inclinaison, des lames du dispositif d'occultation.

Un moteur électrique synchrone connu pour un tel actionneur électromécanique comporte classiquement un rotor comprenant plusieurs pôles, constitués notamment par des aimants permanents, et un stator comprenant au moins un enroulement. Un tel moteur synchrone est par exemple un moteur « sans balais » à courant continu, également désigné par la terminologie BLDC (Brushless DC), ou moteur synchrone à aimants permanents, également désigné par l'acronyme anglais PMSM (Permanent Magnet Synchronous Motor) ou un moteur synchroréluctant avec ou sans aimant permanent.

Dans la suite de la description, on considère de manière non limitative que le stator comprend trois enroulements.

Chaque enroulement du stator est alimenté par un courant d'alimentation électrique périodique triphasé via trois phases électriques, désignées par U, V et W dans la suite de la description, d'un convertisseur de puissance.

Il est connu, par exemple du document EP1319114, de manœuvrer le dispositif d'occultation entre une position initiale et une position finale. Lors de la manœuvre, le moteur est piloté de sorte que sa vitesse de rotation soit égale à une vitesse nominale puis de réduire la vitesse de rotation du moteur de la vitesse nominale à une vitesse réduite au début d'une phase d'approche de la position finale. La position du rotor du moteur est connue grâce à un dispositif de comptage. Le pilotage du moteur est arrêté lors de l'atteinte par le rotor d'une position d'arrêt souhaitée correspondant à la position finale souhaitée du dispositif d'occultation. Afin de maintenir un mouvement du moteur qui est soumis à une charge importante telle que le poids du dispositif d'occultation, la vitesse réduite de rotation du moteur doit rester supérieure à un seuil de vitesse minimum. Ainsi, même pour un fonctionnement du moteur au seuil de vitesse minimum, l'environnement mécanique du moteur, tel que l'inertie du rotor, fait que le rotor ne s'arrête pas de manière instantanée à la position d'arrêt souhaitée et que le moteur continue de tourner de un à deux tours. Ainsi, après immobilisation du rotor, la position réelle d'arrêt du moteur est mal maitrisée. On connaît US 2020/195180 A1 qui divulgue un contrôle de moteur pour occultant permettant une grande vitesse de déplacement et CN 106 788 014 A qui divulgue un contrôle de moteur avec précision pour sa position finale.

Il est par ailleurs connu de piloter certains dispositifs d'occultation selon différentes fonctions de commande consistant d'une part en un déploiement ou un repli du dispositif d'occultation, et d'autre part en une modification de l'orientation, c'est-à-dire de l'angle d'inclinaison, des lames du dispositif d'occultation. Ces différentes manœuvres ne répondent pas de manière optimale à une même loi de commande du moteur électrique, le déploiement ou le repli d'un dispositif d'occultation devant se faire sur plusieurs tours d'un arbre d'enroulement du dispositif d'occultation et à une vitesse nominale bien plus élevée que pour l'orientation des lames, qui a lieu sur quelques degrés angulaires de tour d'arbre. Il est connu de pouvoir gérer des vitesses de rotation différentes, mais généralement le moteur ne fonctionne pas de manière optimale sur l'ensemble de la plage de vitesses souhaitées. Notamment, la position réelle d'arrêt d'un déplacement réalisé à une vitesse très différente de la vitesse nominale de déploiement ou de repli du dispositif d'occultation, n'est donc généralement pas satisfaisante.

L'invention a pour but de proposer un pilotage du moteur permettant d'optimiser les déplacements du dispositif d'occultation et les arrêts du moteur de sorte que la position réelle d'arrêt du moteur soit égale à la position d'arrêt souhaitée.

L'invention a pour objet un dispositif de contrôle d'un moteur électrique d'un dispositif d'occultation, ledit moteur électrique étant de type synchrone et comprenant au moins un rotor et au moins un stator, une position du rotor étant déterminée au moyen d'un dispositif de détermination de la position angulaire du rotor, ledit au moins un stator étant muni d'au moins un enroulement alimenté électriquement par un convertisseur de puissance, ledit convertisseur de puissance comprenant au moins une ligne électrique munie d'au moins une cellule de commutation, le dispositif de contrôle pilotant le convertisseur de puissance au moyen d'une loi de commande nominale dans laquelle une consigne de vitesse de rotation du rotor est égale à une consigne de vitesse nominale entre une position actuelle du rotor et un seuil de fin de commande nominale, caractérisé en ce que le dispositif de contrôle pilote le convertisseur de puissance, suite à la loi de commande nominale et après une immobilisation du rotor à une première position réelle d'arrêt, au moyen d'une loi de commande de type pas à pas entre la première position réelle d'arrêt et une deuxième position réelle d'arrêt.

Le convertisseur de puissance est configuré pour générer le courant d'alimentation du moteur de façon à alimenter chaque enroulement ou groupe d'enroulements, afin de créer un champ magnétique tournant par rapport au stator et ainsi entraîner en rotation le rotor. Plus précisément, le convertisseur de puissance contient au moins une ligne électrique dont chacune des parties de la ligne électrique en lien avec une masse électrique du convertisseur de puissance sera qualifiée de « côté masse », ou « low side » en anglais, et chacune des parties de la ligne électrique en lien avec une alimentation du convertisseur de puissance sera qualifiée de « côté alimentation » ou « high side » en anglais. Chaque ligne électrique comporte sur le côté masse une première cellule de commutation, par exemple un transistor à effet champ de type MOSFET, de type «IGBT» (acronyme du terme anglo-saxon Insulated Gate Bipolar Transistor) ou bipolaires à grille isolée, aussi qualifiée de « low side » et sur le côté alimentation une seconde cellule de commutation, par exemple de type MOSFET, ou transistor de type «IGBT» ou bipolaires à grille isolée, aussi appelée « high side », selon un schéma connu de l'Homme du Métier.

Chaque enroulement ou groupe d'enroulements du stator du moteur est alimenté par une phase électrique de convertisseur de puissance. Plus particulièrement, chaque phase électrique est reliée à une ligne électrique entre la cellule de commutation côté masse et la cellule de commutation côté alimentation.

Chaque cellule de commutation du convertisseur de puissance comprend un état activé dans lequel la cellule de commutation permet un passage d'un courant et un état bloquant dans lequel ladite cellule de commutation bloque ledit passage de courant. Chaque cellule de commutation est commandée par un signal de commande.

La loi de commande du dispositif de contrôle correspond à l'ensemble des signaux de commande. Le dispositif de contrôle est donc un ensemble de composants électroniques, et un ensemble de programmes logiciels qui permettent de piloter les cellules de commutation du convertisseur de puissance.

La loi de commande nominale s'exerçant sur le moteur, entre la position actuelle du rotor et le seuil de fin de commande nominale, détermine une consigne de vitesse de rotation du rotor égale à une consigne de vitesse nominale. Autrement dit, la loi de commande nominale s'exerce sur le moteur tant que celui-ci n'a pas atteint une position correspondant au seuil de fin de commande nominale. Dès que la position actuelle du rotor est égale au seuil de fin de commande nominale, la loi de commande nominale ne s'exerce plus, et plus précisément, plus aucune loi de commande ne s'exerce de sorte que le moteur s'arrête de tourner.

Bien entendu, la consigne de vitesse nominale peut être constante ou variable lors de l'application de la loi de commande nominale. Par exemple, la consigne de vitesse nominale peut varier en fonction de la position du rotor et comprendre des rampes d'accélérations et des rampes de décélération. Ainsi, lorsque la position du rotor s'approche du seuil de fin de commande nominale, la consigne de vitesse nominale peut être réduite.

La loi de commande nominale permet un mouvement plus rapide du dispositif d'occultation que la loi de commande pas à pas. Ainsi, la loi de commande nominale s'applique sur une majeure partie d'un mouvement du dispositif d'occultation entre une position haute et une position basse correspondant aux positions extrêmes que peut prendre le dispositif d'occultation lors de son déploiement.

Après la fin de l'application de la loi de commande nominale, l'arrêt du moteur, entrainé par son inertie, n'est pas immédiat. Ainsi, après immobilisation du rotor, la position actuelle du rotor ne correspond pas au seuil de fin de commande nominal mais à la première position réelle d'arrêt. La première position réelle d'arrêt est en aval selon le sens de rotation du moteur du seuil de fin de commande nominale.

Suite à la loi de commande nominale, après l'immobilisation du rotor à la première position réelle d'arrêt, et afin d'atteindre, très précisément la deuxième position réelle d'arrêt, correspondant à la position d'arrêt souhaitée du moteur, le dispositif de contrôle pilote le moteur avec une loi de commande de type pas à pas. Dans une telle commande, l'alimentation des enroulements est réalisée de sorte à faire tourner le rotor d'un angle déterminé correspondant à un « pas ». L'angle de rotation, ou le pas de rotation du moteur, dépend du nombre de phases électriques du stator et du nombre de paires de pôles du rotor. Plusieurs pas successifs peuvent être effectués dans le même sens de rotation avec ou sans un arrêt du rotor entre chaque pas.

Cette commande à l'avantage de permettre une rotation à très faible vitesse et une bonne précision de la position du rotor.

Ainsi, il est possible de faire tourner précisément le rotor d'un ou plusieurs pas de sorte que la position actuelle soit égale à la deuxième position réelle d'arrêt.

En outre, le mouvement du dispositif d'occultation réalisé avec la loi de commande de type pas à pas étant très lent, il est peu perceptible par l'utilisateur et ne dégrade ainsi pas un ressenti de l'utilisateur.

L'invention, par la combinaison d'une loi de commande nominale et d'une loi de commande pas à pas, permet de réaliser des mouvements avec une vitesse optimale et d'obtenir une position très précise. Ainsi, des performances applicatives du dispositif d'occultation comme par exemple un alignement de l'orientation des lames du dispositif d'occultation, sont améliorées.

L'invention peut également présenter une ou plusieurs des caractéristiques suivantes prises seules ou en combinaison.

Selon un mode de réalisation, la loi de commande nominale est utilisée pour réaliser une première fonction de commande du dispositif d'occultation, et la loi de commande de type pas à pas est utilisée pour réaliser une deuxième fonction de commande, différente de la première fonction de commande, du dispositif d'occultation.

Une fonction de commande du dispositif d'occultation correspond à un mouvement particulier en translation ou en rotation, et selon une vitesse déterminée du dispositif d'occultation.

La première fonction de commande correspond à une fonction pour laquelle le mouvement du dispositif d'occultation doit se réaliser avec une vitesse plus importante que pour la deuxième fonction de commande. La deuxième fonction de commande nécessite de positionner précisément le dispositif d'occultation.

Selon un mode de réalisation, la première fonction de commande est une fonction de déploiement ou de repli du dispositif d'occultation, et dans lequel la deuxième fonction de commande est une fonction d'atteinte d'une position déterminée ou une fonction de modification de l'orientation de dispositif d'occultation.

Selon un mode de réalisation, le seuil de fin de commande nominale est positionné selon le sens de rotation au cours de la loi de commande nominale en amont de, égal à ou en aval de la deuxième position réelle d'arrêt.

Dans ce mode de réalisation, on commande, par la loi de commande nominale, le mouvement du dispositif d'occultation jusqu'au seuil de fin de commande nominale. Par son inertie, le dispositif d'occultation poursuit son mouvement de sorte que la première position réelle d'arrêt est en aval selon le sens de rotation du moteur du seuil de fin de commande nominale.

Lorsque le seuil de fin de commande nominale est confondu avec, ou est selon le sens de rotation du moteur en aval de, la deuxième position réelle d'arrêt correspondant à la position d'arrêt souhaitée, le mouvement associé à la loi de commande de type pas à pas se réalise alors dans un deuxième sens de rotation, opposé au sens de rotation de la loi de commande nominale. Ainsi, la loi de commande pas à pas permet de ramener, ou faire revenir, la position du rotor de la première position réelle d'arrêt à la deuxième position réelle d'arrêt.

Lorsque le seuil de fin de commande nominale est selon le sens de rotation du moteur en amont de la deuxième position réelle d'arrêt correspondant à la position d'arrêt souhaitée, la loi de commande nominale commande le mouvement du dispositif d'occultation jusqu'au seuil de fin de commande nominale. Par son inertie, le dispositif d'occultation poursuit son mouvement de sorte que la première position réelle d'arrêt est en aval selon le sens de rotation du moteur du seuil de fin de commande et en amont selon le sens de rotation du moteur de la position d'arrêt souhaitée. La loi de commande de type pas à pas réalise alors un mouvement du rotor dans le même sens de rotation que le sens de rotation de la loi de commande nominale. Ainsi, la loi de commande pas à pas permet de poursuivre le mouvement du rotor dans le même sens jusqu'à atteindre la deuxième position réelle d'arrêt correspondant à la deuxième position réelle d'arrêt. Selon un mode de réalisation, le dispositif de détermination de la position angulaire du rotor comprend au moins un capteur, en particulier un capteur magnétique, et plus spécifiquement un capteur à effet hall.

Selon un mode de réalisation, le dispositif de détermination de la position angulaire du rotor détermine la position du rotor au moyen d'au moins un signal représentatif de la position du rotor, différent d'un signal émis par un capteur de position.

Par exemple, le signal représentatif de la position angulaire du rotor peut être la force contre-électromotrice générée par le moteur au niveau d'un ou plusieurs des enroulements tel que cela est décrit dans le document WO2014/207387.

Selon un mode de réalisation, la loi de commande de type pas à pas pilote chaque cellule de commutation au moyen d'un signal de commande qui comprend une pluralité d'impulsions sur une période du signal de commande correspondant à un pas de rotation du rotor, lesdites impulsions présentant un rapport cyclique d'impulsion croissant sur la période du signal de commande

La loi de commande de type pas à pas génère, à chaque pas de rotation du rotor, c'est-à-dire sur une période du signal de commande, un signal de commande pour chaque cellule de commutation commandée. Ledit signal de commande comprend une pluralité d'impulsions, une impulsion correspondant au signal de commande à un niveau haut.

Une période du signal de commande de la loi de commande de type pas à pas correspond à un pas de rotation. Autrement dit, à chaque pas, une nouvelle période du signal de commande est créée. A chaque période de signal correspond également une séquence de commutation des cellules de commutation. La commande est réalisée en boucle ouverte.

On définit le rapport cyclique de modulation du signal de commande comme le rapport entre la somme des durées d'impulsion, et la période du signal de commande, suivant la formule : [Math 1] ${R}_{m} = \frac{{\sum }_{n} {t}_{In}}{{T}_{p}}$ Avec
Rₘ : rapport cyclique de modulation du signal de commande
t_{In} : temps de l'impulsion n
Tₚ : période du signal de commande
Pendant la période du signal de commande, les impulsions sont réalisées suivant une fréquence d'impulsion, ou autrement dit suivant une période d'impulsion. La fréquence d'impulsion peut être fixe ou variable sur la période du signal de commande.

On définit le rapport cyclique d'impulsion comme le rapport entre la durée de l'impulsion et la période de l'impulsion, suivant la formule : [Math 2] ${R}_{In} = \frac{{t}_{In}}{{T}_{In}}$ Avec
R_{In} : rapport cyclique de l'impulsion n
t_{In} : temps de l'impulsion n
T_{In} : la période de l'impulsion n

Ainsi, un rapport cyclique d'impulsion de 50% signifie que le signal de commande est au niveau haut 50% du temps de la période d'impulsion.

Les impulsions du signal de commande de la loi de commande de type pas à pas peuvent présenter un rapport cyclique d'impulsion constant ou avantageusement un rapport cyclique croissant sur chaque période du signal de commande. Autrement dit, sur chaque période du signal de commande, la durée de chaque impulsion successive augmente. Le signal de commande comprend donc une pluralité d'impulsions dont la durée de chaque impulsion est croissante sur la période du signal de commande.

Ainsi, une tension d'alimentation moyenne de l'au moins une phase électrique, et donc un courant d'alimentation, varie de manière croissante entre une valeur minimale d'alimentation et une valeur maximale d'alimentation, à chaque période du signal de commande.

La création d'une tension d'alimentation graduellement croissante, permet de faire fonctionner le moteur à très faible vitesse de rotation avec une variation de vitesse et une variation de couple faibles sur un pas. Ainsi, la position du rotor varie de manière moins saccadée que pour un rapport cyclique d'impulsions constant, ce qui diminue le bruit et les vibrations émis lors du fonctionnement du moteur.

Selon un mode de réalisation, la valeur minimale de la tension d'alimentation moyenne vaut zéro entre deux périodes successives du signal de commande de la loi de commande de type pas à pas.

Ainsi, le mouvement du moteur présente un arrêt entre deux pas successifs.

Selon un mode de réalisation, la valeur minimale de la tension d'alimentation moyenne est différente de zéro entre deux périodes successives du signal de commande de la loi de commande de type pas à pas.

Ainsi, le mouvement du moteur est relativement constant.

Selon un mode de réalisation, la loi de commande de type pas à pas est réalisée au moyen d'une loi de commande en modulation de largeur d'impulsion.

Afin de pouvoir régler le niveau de la tension alimentant les phases électriques du moteur, la loi de commande pas à pas peut être réalisée par loi de commande en modulation de largeur d'impulsion, également appelée « pulse width modulation » (PWM) en anglais. Une modulation dite « tournante » est une modulation dans laquelle une cellule de commutation différente du convertisseur de puissance est modulée à chaque commutation.

Cette commande a l'avantage d'être robuste et de requérir peu de puissance de calcul.

Selon un mode de réalisation, la loi de commande de type pas à pas est réalisée au moyen d'une loi de commande en modulation de fréquence d'impulsion. Ainsi on diminue une valeur maximale des harmoniques générées lors du fonctionnement du moteur.

Selon un mode de réalisation, le rapport cyclique d'impulsion augmente linéairement sur la période du signal de commande.

L'invention porte également sur un actionneur électromécanique destiné à un entraînement d'un dispositif d'occultation dans une installation domotique, l'actionneur électromécanique comprenant un moteur électrique synchrone muni d'au moins un rotor et d'au moins un stator, et un dispositif de contrôle conforme à l'une au moins des revendications précédentes, pour le pilotage du moteur.

L'invention porte également sur un procédé de contrôle mettant œuvre un dispositif de contrôle d'un moteur électrique synchrone comprenant au moins un rotor et au moins un stator, une position du rotor étant déterminée au moyen d'un dispositif de détermination de la position angulaire du rotor, ledit au moins un stator étant muni d'au moins un enroulement alimenté électriquement par un convertisseur de puissance, ledit convertisseur de puissance comprenant au moins une ligne électrique munie d'au moins une cellule de commutation, caractérisé en ce que le dispositif de contrôle comprend :
- une première étape dans laquelle une loi de commande nominale est appliquée entre une position actuelle du rotor et un seuil de fin de commande nominale, la loi de commande nominale déterminant une consigne de vitesse de rotation du rotor égale à une consigne de vitesse nominale;
caractérisé en ce que le procédé comprend :
- suite à la commande nominale et après une immobilisation du rotor à une première position réelle d'arrêt, une deuxième étape dans laquelle une loi de commande de type pas à pas est appliquée entre la première position réelle d'arrêt et une deuxième position réelle d'arrêt.

L'invention sera mieux comprise, grâce à la description ci-après, qui se rapporte à plusieurs modes de réalisation selon la présente invention, donné à titre d'exemples non limitatifs et expliqués avec référence aux dessins schématiques annexés, dans lesquels :
[FIG. 1] est une représentation schématique d'un premier mode de réalisation de l'invention,
[FIG. 2] est une représentation schématique d'un deuxième mode de réalisation de l'invention,
[FIG. 3] est une coupe schématique transversale d'une installation conforme à un mode de réalisation de l'invention,
[FIG. 4] est une vue schématique en perspective de l'installation illustrée à la figure 3,
[FIG. 5] la figure 3 est une coupe schématique d'un actionneur électromécanique de l'installation illustrée aux figures 3 et 4, selon un plan de coupe passant par un axe de rotation d'un arbre de sortie de l'actionneur électromécanique,
[FIG. 6] est une représentation schématique d'un convertisseur de puissance et d'un moteur électrique.
[FIG. 7] est une représentation schématique d'une période d'un signal de commande d'un loi de commande de type pas à pas pour une cellule de commutation;
[FIG. 8] est une représentation schématique de la loi de commande de type pas à pas sur une période électrique;

Seuls les éléments nécessaires à la compréhension de l'invention ont été représentés. Pour faciliter la lecture des dessins, les mêmes éléments portent les mêmes références d'une figure à l'autre.

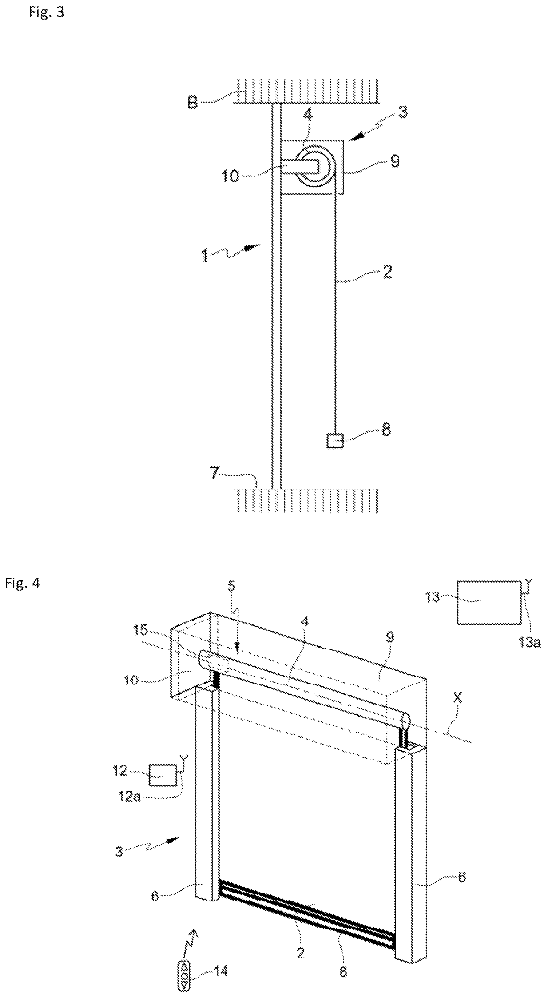

On va décrire tout d'abord, en référence aux figures 3 et 4, une installation conforme à l'invention et installée dans un bâtiment B comportant une ouverture 1, fenêtre ou porte, équipée d'un écran 2 appartenant à un dispositif d'occultation 3, en particulier un store enroulable motorisé.

Le dispositif d'occultation 3 peut être alternativement un volet roulant, un store avec des lames orientables, ou encore une porte enroulable. En pratique, la présente invention s'applique à tous les types de dispositif d'occultation comprenant un arbre d'enroulement motorisé en rotation.

On va décrire, en référence aux figures 3 à 5, un store motorisé conforme à un mode de réalisation de l'invention.

L'écran 2 du dispositif d'occultation 3 est enroulé sur un arbre d'enroulement 4, prévu sous la forme d'un tube d'enroulement, entraîné par un dispositif d'entraînement motorisé 5. L'écran 2 est mobile entre une position enroulée, en particulier haute, et une position déroulée, en particulier basse.

Le dispositif d'entraînement motorisé 5 comprend un actionneur électromécanique 11, en particulier de type tubulaire, permettant de mettre en rotation le tube d'enroulement 4 de sorte à dérouler ou enrouler l'écran 2 du dispositif d'occultation 3, c'est-à-dire que le tube d'enroulement permet un déploiement ou un repliement du dispositif d'occultation 3.

Le dispositif d'occultation 3 comprend le tube d'enroulement 4 pour enrouler l'écran 2. Dans l'état monté de l'installation domotique, l'actionneur électromécanique 11 est inséré dans le tube d'enroulement 4.

L'actionneur électromécanique 11 et le tube d'enroulement 4 sont tous deux positionnés de manière coaxiale le long d'un axe longitudinal X. Le diamètre intérieur du tube d'enroulement 4 est sensiblement équivalent au diamètre externe de l'actionneur électromécanique 11, de sorte que l'actionneur électromécanique 11 peut être inséré dans le tube d'enroulement 4 lors de l'assemblage du dispositif d'occultation 3.

De manière connue, l'écran 2 du dispositif d'occultation 3 est formé par une toile, laquelle s'accroche par une première extrémité, au tube d'enroulement et par l'autre extrémité à une barre lestée 8.

Une position haute ou enroulée de l'écran correspond à la position de la barre lestée au niveau du tube d'enroulement et une position basse ou déroulée correspond à la position de la barre lestée 8 de l'écran 2 au niveau du seuil 7 de l'ouverture 1. Le déploiement de l'écran peut être guidé par des coulisses 6. La position haute et la position basse correspondent à deux positions extrêmes dans lesquelles l'écran 2 est déployé et replié.

Le tube d'enroulement 4 peut être disposé à l'intérieur d'un coffre 9 ou être apparent. Le tube d'enroulement 4 est mobile en rotation par rapport à un support 10, tel qu'une joue, du coffre 9. Le dispositif d'entraînement motorisé 5 est commandé par une unité de commande. L'unité de commande peut être, par exemple, une unité de commande locale 12, où l'unité de commande locale 12 peut être reliée en liaison filaire ou non filaire avec une unité de commande centrale 13. L'unité de commande 12 est représentée ici en version radio avec une antenne 12a. L'unité de commande centrale 13 pilote l'unité de commande locale 12, ainsi que d'autres unités de commande locales similaires et réparties dans le bâtiment. Elle est représentée ici munie d'une antenne radio 13a.

L'unité de commande centrale 13 peut être en communication avec un ou plusieurs capteurs, non représentés, pouvant être configurés pour déterminer, par exemple, une température, une luminosité intérieure ou extérieure.

Une télécommande 14, pouvant être un type d'unité de commande locale, et pourvue d'un clavier de commande, qui comprend des moyens de sélection et éventuellement d'affichage, permet, en outre, à un utilisateur d'intervenir sur l'actionneur électromécanique 11 et/ou l'unité de commande locale 12 et/ou centrale 13.

Le dispositif d'entraînement motorisé 5 est, de préférence, configuré pour exécuter les commandes de déroulement ou d'enroulement de l'écran 2 du dispositif d'occultation 3, pouvant être émises notamment par la télécommande 14, l'unité de commande locale 12, l'unité de commande centrale 13 ou un capteur.

On va décrire à présent, plus en détail, l'actionneur électromécanique 11 appartenant à l'installation domotique des figures 3 à 5.

L'actionneur électromécanique 11 est alimenté en énergie électrique par un réseau d'alimentation électrique du bâtiment, par exemple par le réseau alternatif du secteur ou par un bus à courant continu, ou encore au moyen d'une batterie non représentée, pouvant être rechargée, par exemple, par un panneau photovoltaïque. Ici, l'actionneur électromécanique 11 comprend un câble d'alimentation électrique 18 permettant son alimentation en énergie électrique depuis le réseau d'alimentation électrique du secteur.

Des moyens de commande de l'actionneur électromécanique 11, permettant le déplacement de l'écran 2 du dispositif d'occultation 3, sont constitués par au moins un dispositif de contrôle 15. Les moyens de commande de l'actionneur électromécanique 11 comprennent des moyens matériels et/ou logiciels. A titre d'exemple nullement limitatif, les moyens matériels peuvent comprendre au moins un microcontrôleur.

Le dispositif de contrôle 15 est apte à mettre en fonctionnement un moteur électrique 16 de l'actionneur électromécanique 11 et, en particulier, à permettre l'alimentation en énergie électrique du moteur électrique 16. Ainsi, le dispositif de contrôle 15 commande, notamment, le moteur électrique 16, de sorte à ouvrir ou fermer l'écran 2, comme décrit précédemment.

Le dispositif de contrôle 15 est notamment configuré pour piloter le moteur électrique 16 de manière à mettre en mouvement l'écran 2 pour le déplacer entre une position actuelle et une position d'arrêt souhaitée.

Le dispositif de contrôle 15 de l'actionneur électromécanique 11 peut comprendre un dispositif de détection d'obstacle et de fins de course (non représenté) lors de l'enroulement de l'écran 2 et lors du déroulement de cet écran.

Le dispositif de contrôle 15 comprend un module de réception d'ordres, en particulier d'ordres radioélectriques émis par un émetteur d'ordres, tel que la télécommande 14, destiné à commander l'actionneur électromécanique 11. Le module de réception d'ordres peut ainsi recevoir des consignes de position et/ou ordres de mouvement, tels que, par exemple, ouvrir ou fermer l'écran 2, provenant par exemple d'une unité de commande locale 12, d'une télécommande 14, d'une unité de commande centrale 13 ou d'un capteur de l'installation domotique. Le module de réception d'ordres peut également permettre la réception d'ordres transmis par des moyens filaires.

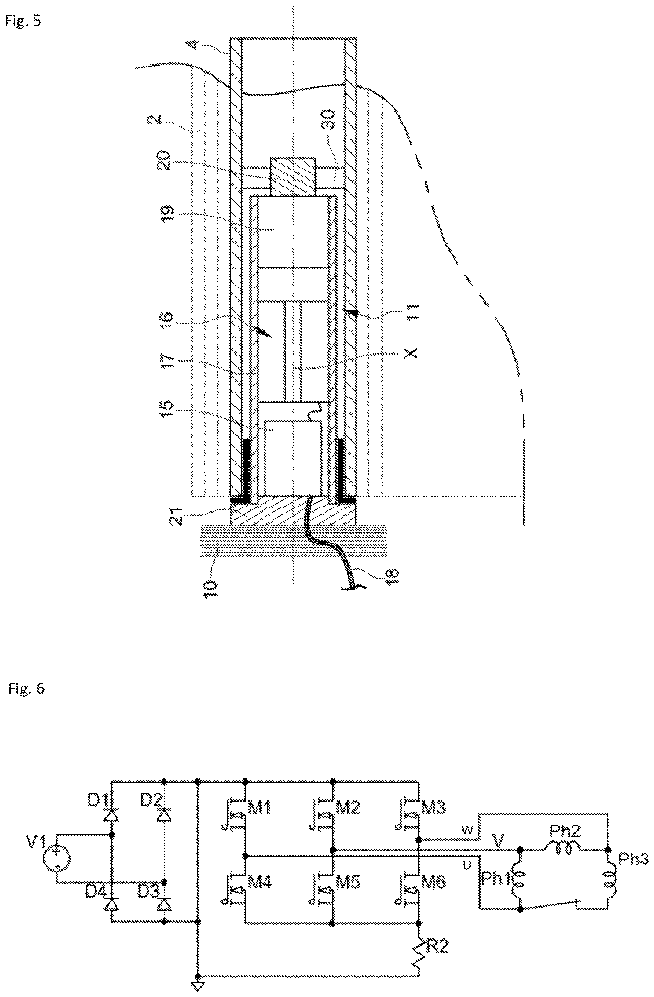

Ici, et tel qu'illustré à la figure 5, le dispositif de contrôle 15 est disposé à l'intérieur d'un carter 17 de l'actionneur électromécanique 11.

Dans un autre mode de réalisation non représenté, l'actionneur électromécanique 11 est destiné à être placé dans un rail profilé en U et destiné à entraîner en rotation un arbre d'enroulement sur lequel s'enroulent des cordons associés à l'écran.

Le carter 17 de l'actionneur électromécanique 11 est, préférentiellement, de forme cylindrique. Dans un mode de réalisation, le carter 17 peut être réalisé dans un matériau métallique. La matière du carter de l'actionneur électromécanique n'est nullement limitative et peut être différente, il peut en particulier s'agir de matière plastique.

L'actionneur électromécanique 11 comprend également un réducteur 19, en particulier un réducteur épicycloïdal et un arbre de sortie 20. Avantageusement, le moteur électrique 16 et le réducteur 19 sont disposés à l'intérieur du carter 17 de l'actionneur électromécanique 11.

L'arbre de sortie 20 de l'actionneur électromécanique 11 est disposé à l'intérieur du tube d'enroulement 4 et, au moins en partie, à l'extérieur du carter 17 de l'actionneur électromécanique 11.

L'arbre de sortie 20 de l'actionneur électromécanique 11 est accouplé par un accessoire de liaison 30 au tube d'enroulement 4, en particulier un accessoire de liaison en forme de roue.

L'actionneur électromécanique 11 comprend également un support de couple 21, monté au niveau d'une extrémité du carter 17 opposée à l'arbre de sortie 20 et obturant l'extrémité du carter 17. Le carter 17 et le support de couple 21 sont fixes en rotation l'un par rapport à l'autre. Le support de couple 21 de l'actionneur électromécanique 11 est fixé au support 10 du coffre 9 du dispositif d'occultation 3. Le support de couple 21 est également appelé « point fixe » de l'actionneur électromécanique 11.

L'actionneur électromécanique 11 comprend également une couronne-palier montée sur le carter 17 et libre en rotation par rapport au carter 17. La couronne-palier est fixée en rotation au tube d'enroulement 4, de sorte que la couronne-palier assure une fonction de palier en rotation du tube d'enroulement 4 sur le carter 17, à proximité du support de couple 21.

Le dispositif de contrôle 15 de l'actionneur électromécanique 11 comprend un circuit de redressement D1, D2, D3, D4 de la tension alternative du réseau d'alimentation électrique permettant de transformer le courant alternatif du réseau d'alimentation en un courant continu, et un convertisseur de puissance. Le convertisseur de puissance est ainsi connecté électriquement à une source de tension alternative V1. La valeur de la tension alternative V1 est définie par rapport à une tension de référence. Alternativement, le circuit de redressement de la tension alternative du réseau d'alimentation électrique peut être externe à l'actionneur électromécanique 11.

Le convertisseur de puissance contient trois lignes électriques dont chacune des parties des lignes électriques en lien avec une masse électrique de la source de tension alternative V1 du convertisseur de puissance sera qualifiée de « côté masse », ou « low side » en anglais, et chacune des parties des lignes électriques en lien avec une alimentation de la source de tension alternative V1 du convertisseur de puissance sera qualifiée de « côté alimentation » ou « high side » en anglais. Chaque ligne électrique comporte sur le côté masse une première cellule de commutation M4, M5, M6, par exemple de type MOSFET ou transistor de type «IGBT» (acronyme du terme anglo-saxon Insulated Gate Bipolar Transistor) aussi qualifiée de « low side » et sur le côté alimentation une seconde cellule de commutation M1, M2, M3, par exemple de type MOSFET ou transistor de type «IGBT», aussi appelée « high side », tel que représenté en figure 6.

Des phases électriques U, V, W des enroulements, ou groupe d'enroulements, Ph1, Ph2, Ph3 du stator du moteur sont alimentées reliées par les lignes électriques de l'onduleur. Plus particulièrement, chaque phase U, V, W est reliée à une ligne électrique du convertisseur de puissance, entre la cellule de commutation côté masse M4, M5, M6 et la cellule de commutation côté alimentation M1, M2, M3.

Chaque cellule de commutation M1, M2, M3, M4, M5, M6 du convertisseur de puissance comprend un état activé dans lequel la cellule de commutation M1, M2, M3, M4, M5, M6 permet un passage d'un courant et un état bloquant dans lequel ladite cellule de commutation M1, M2, M3, M4, M5, M6 bloque ledit passage de courant. Chaque cellule de commutation est commandée par un signal de commande.

La loi de commande du convertisseur de puissance correspond à l'ensemble des signaux de commande. Le convertisseur électrique alimente ainsi en énergie électrique les enroulements, ou groupe d'enroulements, Ph1, Ph2, Ph3, de sorte à produire le champ électromagnétique tournant provoquant l'entraînement en rotation du rotor du moteur électrique 16.

Enfin le convertisseur de puissance comprend une résistance électrique R2 positionnée en série entre le réseau d'alimentation électrique V1 et la cellule de commutation M6. Cette résistance est également appelée résistance de shunt R2.

Le moteur électrique 16 comprend un stator et un rotor positionnés de manière coaxiale autour de l'axe longitudinal ou axe de rotation X.

Le moteur électrique 16 est synchrone, par exemple un moteur « sans balais » à commutation électronique, ou un moteur synchrone à aimants permanents, appelé« PMSM » (acronyme du terme anglais Permanent Magnetic Synchron Motor), ou un moteur synchroréluctant avec ou sans aimant permanents.

Le moteur comprend un rotor muni de pôles et un stator comprenant les enroulements, ou groupe d'enroulements Ph1, Ph2, Ph3, en l'occurrence trois, reliés électriquement entre eux, tel qu'illustré schématiquement à la figure 6. Plus précisément, les enroulements Ph1, Ph2, Ph3 sont reliés entre eux de sorte que lorsqu'ils sont parcourus alternativement par un courant, ils produisent un champ électromagnétique tournant qui entraîne en rotation le rotor.

Chaque enroulement, ou groupe d'enroulements, Ph1, Ph2, Ph3 du stator est alimenté par une phase électrique U, V, W comme cela est visible sur la figure 6.

Le dispositif de contrôle 15 de l'actionneur électromécanique 11 comprend également un dispositif de détermination de la position angulaire du rotor (non représentés). Ce dispositif est configuré pour fournir au dispositif de contrôle 15 un signal représentatif de la position angulaire du rotor par rapport au stator. La position angulaire est ici définie par rapport aux positions des enroulements Ph1, Ph2, Ph3 sur le stator et exprimée sous la forme d'un angle, dit angle électrique, qui peut prendre une valeur comprise dans l'intervalle [0°, 360°] modulo 360°. Ainsi, l'angle 360° correspond à l'angle 0°. La position d'origine de l'angle est ici choisie égale à 0°.

Selon un mode de réalisation, le dispositif de détermination peut être un capteur physique. Le dispositif de détermination de la position angulaire du rotor comprend au moins un capteur positionné de manière fixe par rapport au stator, de préférence intégré à celui-ci. De préférence, ce dispositif de détermination de position angulaire comprend au moins un capteurs à effet Hall à sortie binaire. De façon connue, de tels capteurs sont configurés pour réagir aux flux magnétiques des aimants du rotor et pour fournir chacun un signal représentatif de la position angulaire du rotor permettant de déterminer la position et la vitesse du rotor. Autrement dit, l'au moins un capteur est apte à fournir une position angulaire du rotor du moteur électrique autour de l'axe X et donc une position angulaire équivalente de l'arbre de sortie de l'actionneur électromécanique 11. En variante, d'autres types de capteurs peuvent aussi être utilisés, comme des codeurs à roue.

Selon un autre mode de réalisation, le dispositif de détermination de la position angulaire du rotor détermine la position du rotor au moyen d'au moins un signal représentatif de la position du rotor, différent d'un signal émis par un capteur de position, par exemple en mesurant la force contre-électromotrice générée par le moteur au niveau d'un ou plusieurs des enroulements Ph1, Ph2, Ph3.

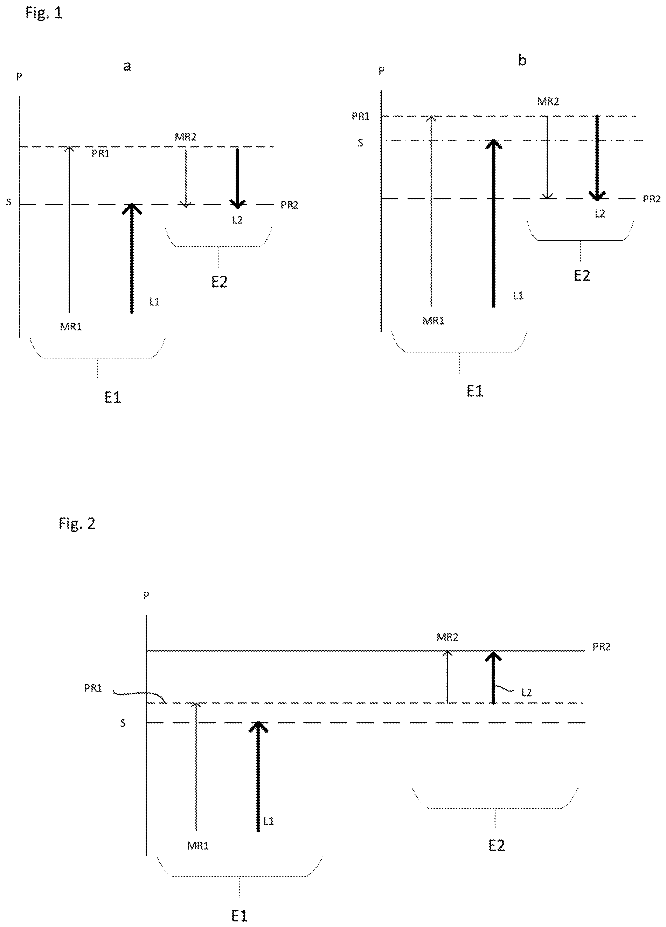

Selon l'invention, et telle que représentée en figure 1 et 2, le dispositif de contrôle 15 pilote, dans une première étape E1, le convertisseur de puissance au moyen d'une loi de commande nominale L1 entre une position actuelle du rotor et un seuil de fin de commande nominale S. Ainsi le rotor réalise un premier mouvement MR1. Dans la loi de commande nominale L1, une consigne de vitesse de rotation du rotor est égale à une consigne de vitesse nominale. Cette loi de commande nominale L1 a pour objet de déplacer l'écran 2 du dispositif d'occultation 3 sur une majeure partie de sa course, entre la position haute et la position basse. La consigne de vitesse de rotation du rotor peut être une valeur constante ou variable avec par exemple un profil de vitesse comprenant notamment des rampes d'accélération et de décélération et une partie à vitesse constante. Autrement dit, la loi de commande nominale L1 s'exerce sur le moteur tant que celui-ci n'a pas atteint une position correspondant au seuil de fin de commande nominale S. Dès que la position actuelle du rotor est égale au seuil de fin de commande nominale S, la loi de commande nominale L1 ne s'exerce plus, et plus précisément, plus aucune loi de commande ne s'exerce de sorte que le moteur s'arrête de tourner. Cependant, l'arrêt du moteur, entrainé par son inertie, n'est pas immédiat. Ainsi, après immobilisation du rotor, la position actuelle du rotor ne correspond pas au seuil de fin de commande nominal S mais à la première position réelle d'arrêt PR1. La première position réelle d'arrêt PR1 est en aval selon le sens de rotation du moteur du seuil de fin de commande nominal S.

Suite à la loi de commande nominale L1, après l'immobilisation du rotor à la première position réelle d'arrêt PR1, et afin d'atteindre, très précisément la deuxième position réelle d'arrêt PR2, correspondant à la position d'arrêt souhaitée du moteur, le dispositif de contrôle 15 pilote, lors d'une deuxième étape E2, le moteur avec une loi de commande de type pas à pas L2. Ainsi le rotor réalise un deuxième mouvement MR2. Dans une telle commande L2, l'alimentation des enroulements est réalisée de sorte à faire tourner le rotor d'un angle déterminé correspondant à un « pas », c'est-à-dire d'une position angulaire stable à une autre position angulaire stable. Une telle commande pas à pas est effectuée en boucle ouverte. L'angle de rotation, ou le pas de rotation du moteur, dépend du nombre de phases électriques U, V, W du stator et du nombre de paires de pôles du rotor. Plusieurs pas successifs peuvent être effectués dans le même sens de rotation avec ou sans un arrêt du rotor entre chaque pas.

La loi de commande de type pas à pas L2 permet de faire tourner le rotor de sorte que la position actuelle soit égale à la deuxième position réelle d'arrêt PR2.

L'invention, par la combinaison de la loi de commande nominale L1 et de la loi de commande pas à pas L2, permet de réaliser des mouvements MR1, MR2 du rotor avec une vitesse optimale et d'obtenir finalement une position très précise. Ainsi, des performances applicatives du dispositif d'occultation 3 comme par exemple un alignement des barres lestées de deux écrans positionnés côte à côte ou une précision de l'orientation des lames du dispositif d'occultation 3, sont améliorées.

Plus précisément, la figure 1a représente un premier mode de réalisation de l'invention dans lequel le seuil de fin de commande nominale S correspond à la deuxième position réelle d'arrêt PR2. Dans ce mode de réalisation, on commande, par la loi de commande nominale L1, le mouvement MR1 du dispositif d'occultation 3 jusqu'à la deuxième position réelle d'arrêt PR2, correspondant à la position d'arrêt souhaitée. Par son inertie, le dispositif d'occultation 3 poursuit son mouvement MR1 de sorte que la première position réelle d'arrêt PR1 est en aval selon le sens de rotation du moteur de la position d'arrêt souhaitée PR2. Le mouvement associé à la loi de commande de type pas à pas L2 se réalise alors dans un deuxième sens de rotation, opposé au sens de rotation de la loi de commande nominal L1. Ainsi, la loi de commande pas à pas L2 permet de ramener, ou faire revenir, la position du rotor de la première position réelle d'arrêt PR1 à la deuxième position réelle d'arrêt PR2. Ce premier mode de réalisation est simple car il permet de se contenter de rattraper les écarts entre la première position réelle d'arrêt PR1 et la position deuxième position réelle d'arrêt PR2 correspondant à la position d'arrêt souhaitée.

La figure 1b représente une alternative à ce premier mode de réalisation de l'invention dans lequel le seuil de fin de commande nominale S est positionné selon le sens de rotation au cours de la loi de commande nominale L1 en aval de la deuxième position réelle d'arrêt PR2. Dans cette alternative au premier mode de réalisation, on commande, par la loi de commande nominale L1, le mouvement MR1 du dispositif d'occultation 3 jusqu'au seuil de fin de commande nominale S, qui est positionné en aval de la deuxième position réelle d'arrêt PR2. Par son inertie, le dispositif d'occultation 3 poursuit son mouvement MR1 de sorte que la première position réelle d'arrêt PR1 est largement en aval selon le sens de rotation du moteur de la position d'arrêt souhaitée PR2. Le mouvement associé à la loi de commande de type pas à pas L2 se réalise alors dans un deuxième sens de rotation, opposé au sens de rotation de la loi de commande nominal L1. Ainsi, la loi de commande pas à pas L2 permet d'une part de rattraper des jeux mécaniques, puis de ramener, ou faire revenir, la position du rotor de la première position réelle d'arrêt PR1 à la deuxième position réelle d'arrêt PR2. Cette alternative présente l'avantage de rattraper les jeux mécaniques et de retrouver la deuxième position d'arrêt PR2, mais il implique également un déplacement plus long avec la loi de commande L2.

La figure 2 illustre un deuxième mode de réalisation dans lequel le seuil de fin de commande nominale S est positionné selon le sens de rotation au cours de la loi de commande nominale L1 en amont de la deuxième position réelle d'arrêt PR2, c'est-à-dire avant d'atteindre la position réelle d'arrêt PR2.

Dans ce mode de réalisation, la loi de commande nominale L1 commande le mouvement MR1 du dispositif d'occultation jusqu'au seuil de fin de commande S qui est positionné en amont selon le sens de rotation du moteur de la deuxième position réelle d'arrêt PR2, correspondant à la position d'arrêt souhaitée. Par son inertie, le dispositif d'occultation 3 poursuit son mouvement MR1 de sorte que la première position réelle d'arrêt PR1 est en aval selon le sens de rotation du moteur du seuil de fin de commande S et en amont selon le sens de rotation du moteur de la position d'arrêt souhaitée PR2. La loi de commande de type pas à pas L2 se réalise alors un mouvement du rotor dans le même sens de rotation que le sens de rotation de la loi de commande nominal L1. Ainsi, la loi de commande pas à pas L2 permet de poursuivre le mouvement du rotor dans le même sens jusqu'à atteindre la deuxième position réelle d'arrêt PR2 correspondant à la deuxième position réelle d'arrêt. Ainsi, en anticipant un déplacement par inertie du rotor, on corrige la position obtenue sans modifier le sens de rotation.

De manière générale, la loi de commande nominale L1 est utilisée pour réaliser une première fonction de commande du dispositif d'occultation 3 tandis que la loi de commande de type pas à pas L2 est utilisée pour réaliser une deuxième fonction de commande, différente de la première fonction de commande, du dispositif d'occultation.

Une fonction de commande du dispositif d'occultation 3 correspond à un mouvement particulier en translation ou en rotation, et selon une vitesse déterminée du dispositif d'occultation 3.

La première fonction de commande correspond à une fonction pour laquelle le mouvement du dispositif d'occultation 3 doit se réaliser avec une vitesse largement plus importante que pour la deuxième fonction de commande, généralement sur une majeure partie de la course de déploiement ou de repli entre deux positions extrêmes. La deuxième fonction de commande nécessite de positionner précisément le dispositif d'occultation.

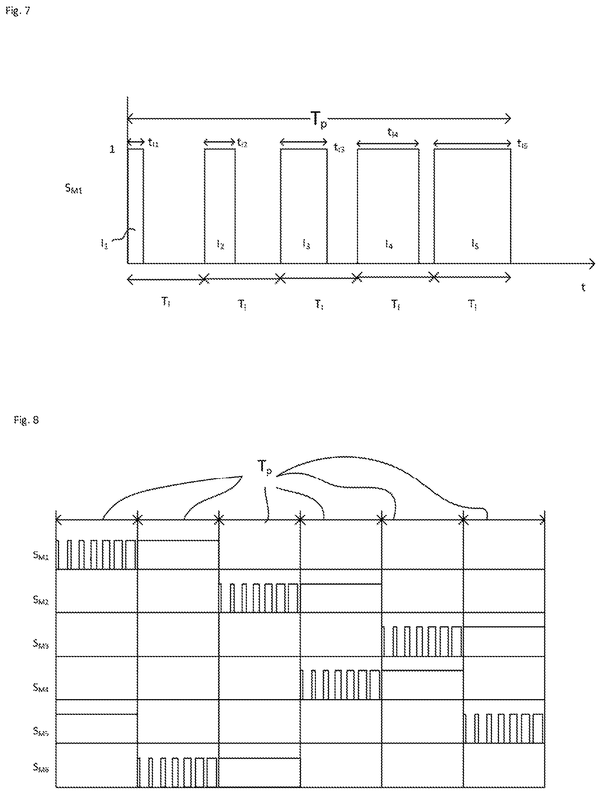

Par exemple, la première fonction de commande est une fonction de déploiement ou de repli du dispositif d'occultation 3, et la deuxième fonction de commande est une fonction d'atteinte d'une position déterminée ou une fonction de modification de l'orientation de dispositif d'occultation 3. La loi de commande de type pas à pas L2 dans sa forme avantageuse va être décrite en détail en référence aux figures 7 et 8. La loi de commande de type pas à pas L2 comprend un signal de commande S_{M1}, S_{M2}, S_{M3}, S_{M4}, S_{M5}, S_{M6} pour chaque cellule de commutation M1, M2, M3, M4, M5, M6. La loi de commande génère, à chaque pas de rotation du rotor, c'est-à-dire sur une période Tₚ du signal de commande, un signal de commande S_{M1}, S_{M2}, S_{M3}, S_{M4}, S_{M5}, S_{M6} pour chaque cellule de commutation M1, M2, M3, M4, M5, M6 commandée. Ledit signal de commande S_{M1}, S_{M2}, S_{M3}, S_{M4}, S_{M5}, S_{M6} comprend une pluralité d'impulsions I₁, I₂, I₃, I₄, I₅, une impulsion I₁, I₂, I₃, I₄, I₅, correspondant au signal de commande à un niveau haut.

Un pas correspond à un mouvement entre deux positions angulaires stables du moteur. Une telle commande pas à pas L2 est effectuée en boucle ouverte.

La période Tₚ du signal de commande S_{M1}, S_{M2}, S_{M3}, S_{M4}, S_{M5}, S_{M6} de la loi de commande de type pas à pas L2 correspond donc à un pas de rotation. Autrement dit, à chaque pas, une nouvelle période T_{P} du signal de commande S_{M1}, S_{M2}, S_{M3}, S_{M4}, S_{M5}, S_{M6} est créée.

Un rapport cyclique de modulation du signal de commande S_{M1}, S_{M2}, S_{M3}, S_{M4}, S_{M5}, S_{M6} est le rapport entre la somme des durées t_{I1}, t_{I2}, t_{I3}, t_{I4}, t_{I5} d'impulsion I₁, I₂, I₃, I₄, I₅, et la période Tₚ du signal de commande, suivant la formule : [Math 1] ${R}_{m} = \frac{{\sum }_{n} {t}_{In}}{{T}_{p}}$ Avec
Rₘ : rapport cyclique de modulation du signal de commande
t_{In} : temps de l'impulsion n
Tₚ : période du signal de commande
Pendant la période Tₚ du signal de commande S_{M1}, S_{M2}, S_{M3}, S_{M4}, S_{M5}, S_{M6}, les impulsions I₁, I₂, I₃, I₄, I₅, sont réalisées suivant une fréquence d'impulsion, ou autrement dit suivant une période T_{I} d'impulsion. La fréquence d'impulsion peut être fixe ou variable sur la période Tₚ du signal de commande S_{M1}, S_{M2}, S_{M3}, S_{M4}, S_{M5}, S_{M6}.

Le rapport cyclique d'impulsion est le rapport entre la durée t_{I1}, t_{I2}, t_{I3}, t_{I4}, t_{I5} de l'impulsion I₁, I₂, I₃, I₄, I₅ et la période T₁ de l'impulsion impulsions I₁, I₂, I₃, I₄, I₅, suivant la formule : [Math 2] ${R}_{In} = \frac{{t}_{In}}{{T}_{In}}$ Avec
R_{In} : rapport cyclique de l'impulsion n
t_{In} : temps de l'impulsion n
T_{In} : la période de l'impulsion n

Ainsi, un rapport cyclique d'impulsion R_{In} de 50% signifie que le signal de commande S_{M1}, S_{M2}, S_{M3}, S_{M4}, S_{M5}, S_{M6} est au niveau haut 50% du temps de la période T_{I} d'impulsion I₁, I₂, I₃, I₄, I₅. Les impulsions I₁, I₂, I₃, I₄, I₅ du signal de commande S_{M1}, S_{M2}, S_{M3}, S_{M4}, S_{M5}, S_{M6} présentent avantageusement un rapport cyclique croissant. Autrement dit, sur chaque période T_{P} du signal de commande S_{M1}, S_{M2}, S_{M3}, S_{M4}, S_{M5}, S_{M6}, la durée t_{I1}, t_{I2}, t_{I3}, t_{I4}, t_{I5} de chaque impulsion I₁, I₂, I₃, I₄, I₅ successive augmente. Le signal de commande S_{M1}, S_{M2}, S_{M3}, S_{M4}, S_{M5}, S_{M6} comprend donc une pluralité d'impulsions I₁, I₂, I₃, I₄, I₅ dont la durée de chaque impulsion I₁, I₂, I₃, I₄, I₅ est croissante sur la période T_{P} du signal de commande S_{M1}, S_{M2}, S_{M3}, S_{M4}, S_{M5}, S_{M6}.

Tel qu'illustrée sur la figure 2, les signaux de commande de deux cellules de commutation sont modulées sur une période Tₚ du signal de commande S_{M1}, S_{M2}, S_{M3}, S_{M4}, S_{M5}, S_{M6}. De manière connue, lorsque la cellule de commutation M1 est modulée et qu'une autre cellule M5 ou M6 est commutée à un état haut, la phase électrique U est alimentée, lorsque la cellule de commutation M2 est modulée et qu'une autre cellule M4 ou M6 est commutée à un état haut, la phase électrique V est alimentée, lorsque la cellule de commutation M3 est modulée et qu'une autre cellule M4 ou M5 est commutée à un état haut, la phase électrique W est alimentée.

Ainsi, une tension d'alimentation moyenne de chaque phase électrique U, V, W, et donc un courant d'alimentation, varie de manière croissante entre une valeur minimale d'alimentation et une valeur maximale d'alimentation à chaque période T_{P} du signal de commande S_{M1}, S_{M2}, S_{M3}, S_{M4}, S_{M5}, S_{M6}.

Selon un mode de réalisation non représenté, la valeur minimale de la tension d'alimentation moyenne vaut zéro entre deux périodes T_{P} successives du signal de commande S_{M1}, S_{M2}, S_{M3}, SM4, S_{M5}, S_{M6}.

Ainsi, le mouvement du moteur présente un arrêt entre deux pas successifs.

Selon un mode de réalisation, la valeur minimale de la tension d'alimentation moyenne est différente de zéro entre deux périodes T_{P} successives du signal de commande S_{M1}, S_{M2}, S_{M3}, SM4, S_{M5}, S_{M6}.

Ainsi, le mouvement du moteur est relativement constant.

Selon un mode de réalisation, la loi de commande pas à pas est réalisée au moyen d'une loi de commande en modulation de largeur d'impulsion.

Afin de pouvoir régler le niveau de la tension alimentant les phases électriques du moteur, la loi de commande pas à pas peut être réalisée par loi de commande en modulation de largeur d'impulsion, également appelée « pulse width modulation » (PWM) en anglais. Une modulation dite « tournante » est une modulation dans laquelle une cellule de commutation M1, M2, M3, M4, M5, M6 différente du convertisseur de puissance est modulée à chaque commutation.

Cette commande a l'avantage d'être robuste et de requérir peu de puissance de calcul.

Selon un mode de réalisation, la loi de commande pas à pas est réalisée au moyen d'une loi de commande en modulation de fréquence d'impulsion. Ainsi on diminue une valeur maximale des harmoniques générées lors du fonctionnement du moteur.

Selon un mode de réalisation, le rapport cyclique d'impulsion R_{In} augmente linéairement sur la période T_{P} du signal de commande S_{M1}, S_{M2}, S_{M3}, S_{M4}, S_{M5}, S_{M6}.

Selon un mode de réalisation, l'augmentation du rapport cyclique d'impulsion R_{In} a une pente de croissance dépendante d'une vitesse de rotation souhaitée du rotor et/ou d'un couple de travail souhaité.

Selon un mode de réalisation, une fréquence d'impulsion du signal de commande S_{M1}, S_{M2}, S_{M3}, S_{M4}, S_{M5}, S_{M6} varie en fonction d'une vitesse de rotation moteur souhaitée.

Selon un mode de réalisation, la période T_{P} du signal de commande S_{M1}, S_{M2}, S_{M3}, S_{M4}, S_{M5}, S_{M6} est déterminée par une condition d'arrêt dépendante d'un mouvement du rotor du moteur d'un angle de rotation prédéfini et/ou d'un seuil de tension d'alimentation maximale.

La condition d'arrêt détermine la période T_{P} du signal de commande S_{M1}, S_{M2}, S_{M3}, S_{M4}, S_{M5}, S_{M6} et donc une fréquence entre chaque pas de rotation.

La condition d'arrêt dépendante du mouvement du rotor permet de débuter une nouvelle période T_{P} du signal de commande S_{M1}, S_{M2}, S_{M3}, S_{M4}, S_{M5}, S_{M6} dès la réalisation du mouvement d'un pas du rotor. Autrement dit, la valeur maximale de la tension d'alimentation fournie à la phase électrique U, V, W correspond au minimum nécessaire pour réaliser le mouvement du rotor d'un pas de rotation. Cette condition d'arrêt permet donc une diminution de la consommation électrique du moteur par une prise en compte d'une charge d'un environnement extérieur du moteur, notamment du poids d'un écran du dispositif d'occultation à entrainer par le moteur. La valeur maximale de la tension d'alimentation varie donc entre chaque pas, ou entre chaque période T_{P} du signal de commande S_{M1}, S_{M2}, S_{M3}, S_{M4}, S_{M5}, S_{M6}.

La condition d'arrêt dépendante d'un seuil de tension maximale correspond à une alimentation de la phase électrique U, V, W tant que la valeur maximale de la tension d'alimentation n'a pas atteint le seuil de tension maximale. Le seuil de tension maximale doit donc être choisi de sorte à assurer le mouvement du rotor. Autrement dit, le seuil de tension maximale prend en compte la charge de l'environnement extérieur du moteur la plus élevée. Cependant, cette condition d'arrêt ne nécessite pas de déterminer la réalisation du mouvement du rotor.

Le dispositif de contrôle 15 met en œuvre un procédé de contrôle comprenant une étape de commande d'une première cellule de commutation M1, M2, M3, M4, M5, M6 avec un premier signal de commande S_{M1}, S_{M2}, S_{M3}, S_{M4}, S_{M5}, S_{M6}, ladite étape de commande comprenant, tant qu'une condition d'arrêt n'est pas atteinte:
- une première phase dans laquelle le signal de commande S_{M1}, S_{M2}, S_{M3}, S_{M4}, S_{M5}, S_{M6} comprend une première impulsion I₁ avec une première valeur de rapport cyclique;
- puis une deuxième phase dans laquelle le signal de commande S_{M1}, S_{M2}, S_{M3}, S_{M4}, S_{M5}, S_{M6} comprend une deuxième impulsion I₂ avec une deuxième valeur de rapport cyclique, supérieure à la première valeur de rapport cyclique.

Selon un mode de réalisation, le procédé comprend une phase de détermination du mouvement du rotor du moteur d'un angle de rotation prédéfini mettant en œuvre au moins un capteur de position et/ou déterminant le mouvement du rotor au moyen d'au moins un signal représentatif de la position du rotor, différent d'un signal émis par le capteur de position.

## Revendications

1. Dispositif de contrôle (15) d'un moteur électrique (16) d'un dispositif d'occultation (3), ledit moteur électrique (16) étant de type synchrone et comprenant au moins un rotor et au moins un stator, une position du rotor étant déterminée au moyen d'un dispositif de détermination de la position angulaire du rotor, ledit au moins un stator étant muni d'au moins un enroulement (Ph1, Ph2, Ph3) alimenté électriquement par un convertisseur de puissance, ledit convertisseur de puissance comprenant au moins une ligne électrique (U, V, W) munie d'au moins une cellule de commutation (M1, M2, M3, M4, M5, M6), le dispositif de contrôle (15) pilotant le convertisseur de puissance au moyen d'une loi de commande nominale (L1) dans laquelle une consigne de vitesse de rotation du rotor est égale à une consigne de vitesse nominale entre une position actuelle du rotor et un seuil de fin de commande nominale (S), **caractérisé en ce que** le dispositif de contrôle (15) pilote le convertisseur de puissance, suite à la loi de commande nominale (L1) et après une immobilisation du rotor à une première position réelle d'arrêt (PR1), au moyen d'une loi de commande de type pas à pas (L2) entre la première position réelle d'arrêt (PR1) et une deuxième position réelle d'arrêt (PR2).

2. Dispositif de contrôle (15) selon la revendication 1, dans lequel la loi de commande nominale (L1) est utilisée pour réaliser une première fonction de commande du dispositif d'occultation (3), et la loi de commande de type pas à pas (L2) est utilisée pour réaliser une deuxième fonction de commande, différente de la première fonction de commande, du dispositif d'occultation (3).

3. Dispositif de contrôle (15) selon la revendication 2, dans lequel la première fonction de commande est une fonction de déploiement ou de repli du dispositif d'occultation (3), et dans lequel la deuxième fonction de commande est une fonction d'atteinte d'une position déterminée ou une fonction de modification de l'orientation de dispositif d'occultation (3).

4. Dispositif de contrôle (15) selon l'une quelconque des revendications 1 à 3, dans lequel le seuil de fin de commande nominale (S) est positionné selon le sens de rotation au cours de la loi de commande nominale (L1) en amont de, égal à ou en aval de la deuxième position réelle d'arrêt (PR2).

5. Dispositif de contrôle (15) selon l'une quelconque des revendications précédentes, dans lequel le dispositif de détermination de la position angulaire du rotor comprend au moins un capteur, en particulier un capteur magnétique, et plus spécifiquement un capteur à effet hall.

6. Dispositif de contrôle (15) selon l'une quelconque des revendications 1 à 4 dans lequel le dispositif de détermination de la position angulaire du rotor détermine la position du rotor au moyen d'au moins un signal représentatif de la position du rotor, différent d'un signal émis par un capteur de position.

7. Dispositif de contrôle (15) selon l'une quelconque des revendications précédentes, dans lequel la loi de commande de type pas à pas (L2) pilote chaque cellule de commutation (M1, M2, M3, M4, M5, M6) au moyen d'un signal de commande (S_{M1}, S_{M2}, S_{M3}, S_{M4}, S_{M5}, S_{M6}) qui comprend une pluralité d'impulsions (I₁, I₂, I₃, I₄, I₅) sur une période (Tₚ) du signal de commande (S_{M1}, S_{M2}, S_{M3}, S_{M4}, S_{M5}, S_{M6}) correspondant à un pas de rotation du rotor, lesdites impulsions (I₁, I₂, I₃, I₄, I₅) présentant un rapport cyclique d'impulsion (R_{In}) croissant sur la période (Tₚ) du signal de commande (S_{M1}, S_{M2}, S_{M3}, S_{M4}, S_{M5}, S_{M6}).

8. Dispositif de contrôle (15) selon la revendication 7, dans lequel le rapport cyclique d'impulsion (R_{In}) augmente linéairement sur la période (Tₚ) du signal de commande (S_{M1}, S_{M2}, S_{M3}, S_{M4}, S_{M5}, SM6).

9. Actionneur électromécanique (11) destiné à un entraînement d'un dispositif d'occultation (3) dans une installation domotique, l'actionneur électromécanique (11) comprenant un moteur électrique synchrone (16) muni d'au moins un rotor et d'au moins un stator, et un dispositif de contrôle (15) conforme à l'une au moins des revendications précédentes, pour le pilotage du moteur (16).

10. Procédé de contrôle mettant œuvre un dispositif de contrôle (15) d'un moteur électrique synchrone (16) comprenant au moins un rotor et au moins un stator, une position du rotor étant déterminée au moyen d'un dispositif de détermination de la position angulaire du rotor, ledit au moins un stator étant muni d'au moins un enroulement (Ph1, Ph2, Ph3) alimenté électriquement par un convertisseur de puissance, ledit convertisseur de puissance comprenant au moins une ligne électrique (U, V, W) munie d'au moins une cellule de commutation (M1, M2, M3, M4, M5, M6), **caractérisé en ce que** le dispositif de contrôle (15) comprend :
- une première étape (E1) dans laquelle une loi de commande nominale (L1) est appliquée entre une position actuelle du rotor et un seuil de fin de commande nominale (S), la loi de commande nominale (L1) déterminant une consigne de vitesse de rotation du rotor égale à une consigne de vitesse nominale;
**caractérisé en ce que** le procédé comprend :
- suite à la commande nominale (L1) et après une immobilisation du rotor à une première position réelle d'arrêt (PR1), une deuxième étape (E2) dans laquelle une loi de commande de type pas à pas (L2) est appliquée entre la première position réelle d'arrêt (PR1) et une deuxième position réelle d'arrêt (PR2).

## Patentansprüche

1. Vorrichtung zur Steuerung (15) eines Elektromotors (16) einer Abdeckvorrichtung (3), wobei der Elektromotor (16) vom Synchrontyp ist und mindestens einen Rotor und mindestens einen Stator umfasst, wobei eine Position des Rotors mittels einer Vorrichtung zur Bestimmung der Winkelposition des Rotors bestimmt wird, wobei der mindestens eine Stator mit mindestens einer Wicklung (Ph1, Ph2, Ph3) versehen ist, die von einem Leistungswandler elektrisch versorgt wird, der Leistungswandler, der mindestens eine elektrische Leitung (U, V, W) umfasst, die mit mindestens einer Schaltzelle (M1, M2, M3, M4, M5, M6) versehen ist, wobei die Vorrichtung zur Steuerung (15) den Leistungswandler mittels einer nominalen Steuerungsstrategie (L1) steuert, bei der ein Drehzahlsollwert des Rotors gleich einem nominalen Geschwindigkeitssollwert zwischen einer aktuellen Position des Rotors und einer Schwelle des nominalen Ansteuerungsendes (S) ist, **dadurch gekennzeichnet, dass** die Vorrichtung zur Steuerung (15) den Leistungswandler infolge der nominalen Steuerungsstrategie (L1) und nach einem Stillstand des Rotors in einer ersten tatsächlichen Stopp-Position (PR1) mittels einer Steuerungsstrategie vom Typ Einzelschritt (L2) zwischen der ersten tatsächlichen Stopp-Position (PR1) und einer zweiten tatsächlichen Stopp-Position (PR2) steuert.

2. Vorrichtung zur Steuerung (15) nach Anspruch 1, wobei die nominale Steuerungsstrategie (L1) verwendet wird, um eine erste Steuerfunktion der Abdeckvorrichtung (3) auszuführen, und die Steuerungsstrategie vom Typ Einzelschritt (L2) verwendet wird, um eine zweite Steuerfunktion, die sich von der ersten Steuerfunktion unterscheidet, der Abdeckvorrichtung (3) auszuführen.

3. Vorrichtung zur Steuerung (15) nach Anspruch 2, wobei die erste Steuerfunktion eine Ausfahr- oder Einfahrfunktion der Abdeckvorrichtung (3) ist, und wobei die zweite Steuerfunktion eine Funktion zum Erreichen einer bestimmten Position oder eine Funktion zum Ändern der Ausrichtung der Abdeckvorrichtung (3) ist.

4. Vorrichtung zur Steuerung (15) nach einem der Ansprüche 1 bis 3, wobei die Schwelle des nominalen Ansteuerungsendes (S) entsprechend der Drehrichtung im Laufe der nominalen Steuerungsstrategie (L1) vor, gleich oder nach der zweiten tatsächlichen Stopp-Position (PR2) positioniert ist.

5. Vorrichtung zur Steuerung (15) nach einem der vorstehenden Ansprüche, wobei die Vorrichtung zur Bestimmung der Winkelposition des Rotors mindestens einen Sensor, insbesondere einen Magnetsensor, und insbesondere einen Halleffektsensor umfasst.

6. Vorrichtung zur Steuerung (15) nach einem der Ansprüche 1 bis 4, wobei die Vorrichtung zur Bestimmung der Rotorwinkelposition die Position des Rotors mittels mindestens eines für die Position des Rotors repräsentativen Signals bestimmt, das sich von einem von einem Positionssensor ausgegebenen Signal unterscheidet.

7. Vorrichtung zur Steuerung (15) nach einem der vorstehenden Ansprüche, wobei die Steuerungsstrategie vom Typ Einzelschritt (L2) jede Schaltzelle (M1, M2, M3, M4, M5, M6) mittels eines Steuersignals (S _{M1}, S _{M2)}, S_{M3}, S_{M4}, S_{M5}, S_{M6} ) steuert, das eine Vielzahl von Impulsen (I₁, I₂, I₃, I₄, I₅ ) über einen Zeitraum (Tₚ ) des Steuersignals (S_{M1}, S_{M2}, S_{M3}, S_{M4}, S_{M5}, S_{M6} ) umfasst, die einer Drehung des Rotors entsprechen, wobei die Impulse (I₁, I₂, I₃, I₄, I₅ ) ein Impuls-Tastverhältnis (R_{In}) aufweisen, das über den Zeitraum (Tₚ) des Steuersignals (S_{M1}, S_{M2}, S_{M3}, S_{M4}, S_{M5}, S_{M6}) hinweg zunimmt.

8. Vorrichtung zur Steuerung (15) nach Anspruch 7, wobei das Impuls-Tastverhältnis (R_{In}) über den Zeitraum (Tₚ) des Steuersignals (S_{M1}, S_{M2}, S_{M3}, S_{M4}, S_{M5}, S_{M6}) hinweg linear zunimmt.

9. Elektromechanische Betätigungsvorrichtung (11), die zu einem Antrieb einer Abdeckvorrichtung (3) in einer Haustechnikanlage bestimmt ist, wobei die elektromechanische Betätigungsvorrichtung (11) einen Synchron-Elektromotor (16) umfasst, der mit mindestens einem Rotor und mindestens einem Stator und einer Vorrichtung zur Steuerung (15) nach mindestens einem der vorstehenden Ansprüche zur Steuerung des Motors (16) versehen ist.

10. Verfahren zur Steuerung, das eine Vorrichtung zur Steuerung (15) eines Synchron-Elektromotors (16) umsetzt, der mindestens einen Rotor und mindestens einen Stator umfasst, wobei eine Position des Rotors mittels einer Vorrichtung zur Bestimmung der Winkelposition des Rotors bestimmt wird, wobei der mindestens eine Stator mit mindestens einer Wicklung (Ph1, Ph2, Ph3) versehen ist, die von einem Leistungswandler elektrisch versorgt wird, wobei der Leistungswandler mindestens eine elektrische Leitung (U, V, W) umfasst, die mit mindestens einer Schaltzelle (M1, M2, M3, M4, M5, M6) versehen ist, **dadurch gekennzeichnet, dass** die Vorrichtung zur Steuerung (15) umfasst:
- einen ersten Schritt (E1), bei dem eine nominale Steuerungsstrategie (L1) zwischen einer aktuellen Position des Rotors und einer Schwelle des nominalen Ansteuerungsendes (S) angewendet wird, wobei die nominale Steuerungsstrategie (L1) einen Drehzahlsollwert des Rotors bestimmt, der gleich einem nominalen Geschwindigkeitssollwert ist;
**dadurch gekennzeichnet, dass** das Verfahren umfasst:
- nach der nominalen Ansteuerung (L1) und nach dem Stillstand des Rotors in einer ersten tatsächlichen Stopp-Position (PR1) einen zweiten Schritt (E2), bei dem zwischen der ersten tatsächlichen Stopp-Position (PR1) und einer zweiten tatsächlichen Stopp-Position (PR2) eine Steuerungsstrategie vom Typ Einzelschritt (L2) angewendet wird.

## Claims

1. A control device (15) for an electric motor (16) of a shading device (3), said electric motor (16) being of the synchronous type and comprising at least one rotor and at least one stator, a position of the rotor being determined by means of a device for determining the angular position of the rotor, said at least one stator being provided with at least one winding (Ph1, Ph2, Ph3) electrically powered by a power converter, said power converter comprising at least one electrical line (U, V, W) provided with at least one switching cell (M1, M2, M3, M4, M5, M6), the control device (15) controlling the power converter by means of a nominal control law (L1) in which a rotor rotational speed setpoint is equal to a nominal speed setpoint between an current position of the rotor and a nominal control end threshold (S), **characterized in that** the control device (15) controls the power converter, following the nominal control law (L1) and after the rotor has come to a stop at a first actual stop position (PR1), by means of a step-by-step control law (L2) between the first actual stop position (PR1) and a second actual stop position (PR2).

2. The control device (15) according to claim 1, wherein the nominal control law (L1) is used to perform a first control function of the shading device (3), and the step-by-step control law (L2) is used to perform a second control function, different from the first control function, of the shading device (3).

3. The control device (15) according to claim 2, wherein the first control function is a function of deploying or retracting the shading device (3), and wherein the second control function is a function of reaching a determined position or a function of changing the orientation of the shading device (3).

4. The control device (15) according to any one of claims 1 to 3, wherein the nominal control end threshold (S) is positioned in the direction of rotation during the nominal control law (L1) upstream of, at, or downstream of the second actual stop position (PR2).

5. The control device (15) according to any one of the preceding claims, wherein the device for determining the angular position of the rotor comprises at least one sensor, in particular a magnetic sensor, and more specifically a Hall effect sensor.

6. The control device (15) according to any one of claims 1 to 4 wherein the device for determining the angular position of the rotor determines the position of the rotor by means of at least one signal representative of the position of the rotor, that is different from a signal emitted by a position sensor.

7. The control device (15) according to any one of the preceding claims, wherein the step-by-step control law (L2) controls each switching cell (M1, M2, M3, M4, M5, M6) by means of a control signal (S_{M1}, S_{M2}, S_{M3}, S_{M4}, S_{M5}, S_{M6}) which comprises a plurality of pulses (I₁, I₂, I₃, I₄, I₅) over a period (Tₚ) of the control signal (S_{M1}, S_{M2}, S_{M3}, S_{M4}, S_{M5}, S_{M6}) corresponding to one rotation step of the rotor, said pulses (I₁, I₂, I₃, I₄, I₅) having a pulse duty cycle (R_{In}) increasing over the period (Tₚ) of the control signal (S_{M1}, S_{M2}, S_{M3}, S_{M4}, S_{M5}, S_{M6}).

8. The control device (15) according to claim 7, wherein the pulse duty cycle (R_{In}) increases linearly over the period (Tₚ) of the control signal (S_{M1}, S_{M2}, S_{M3}, S_{M4}, S_{M5}, S_{M6}).

9. An electromechanical actuator (11) intended to drive a shading device (3) in a home automation system, the electromechanical actuator (11) comprising a synchronous electric motor (16) provided with at least one rotor and at least one stator, and a control device (15) according to at least any one of the preceding claims, for controlling the motor (16).

10. A control method using a control device (15) for a synchronous electric motor (16) comprising at least one rotor and at least one stator, a position of the rotor being determined by means of a device for determining the angular position of the rotor, said at least one stator being provided with at least one winding (Ph1, Ph2, Ph3) electrically powered by a power converter, said power converter comprising at least one electrical line (U, V, W) provided with at least one switching cell (M1, M2, M3, M4, M5, M6), **characterized in that** the control device (15) comprises:
- a first step (E1) in which a nominal control law (L1) is applied between a current position of the rotor and a nominal control end threshold (S), the nominal control law (L1) determining a rotor rotational speed setpoint equal to a nominal speed setpoint;
**characterized in that** the method comprises:
- following the nominal control law (L1) and after the rotor has come to a stop at a first actual stop position (PR1), a second step (E2) in which a step-by-step control law (L2) is applied between the first actual stop position (PR1) and a second actual stop position (PR2).
